# EUROPÄISCHE PATENTSCHRIFT

(11) **EP 2 482 469 B1**
(45) Veröffentlichungstag und Bekanntmachung des Hinweises auf die Patenterteilung: **29.06.2016**
(21) Anmeldenummer: 12000301.7
(22) Anmeldetag: 19.01.2012
(51) Int. Cl.: H01Q 7/00, H01Q 1/22, H01Q 1/32, G06K 19/077, G06K 19/073, H01Q 23/00

(54) **Detektierplättchen mit anpassbarer Sende- und Empfangsreichweite durch Positionieren eines verstellbaren Dämpfungselements.**
Detection plate with adjusable transmission and reception range by positioning a movable attenuator.
Plaquette de détection avec une portée ajustable par positionner une élément d'atténuation.

(30) Priorität: 01.02.2011 DE 202011002173 U
(43) Veröffentlichungstag der Anmeldung: 01.08.2012
(73) Patentinhaber: ASTRA Gesellschaft für Asset Management mbH & Co. KG, 30890 Barsinghausen (DE)
(72) Erfinder: Stobbe, Anatoli, 30890 Barsinghausen (DE); Maass, Norman, 30455 Hannover (DE)
(74) Vertreter: Patentanwälte Thömen & Körner

(56) Entgegenhaltungen:
- EP-A2- 2 009 583
- US-A1- 2010 194 542

## Beschreibung

Die Erfindung betrifft ein Detektierplättchen nach dem Oberbegriff des Anspruchs 1.

Als Detektierplättchen bezeichnet man einen Datenträger mit einem elektronischen Chip, der berührungslos von einem Lesegerät gelesen und gegebenenfalls auch beschrieben werden kann. Die für den Betrieb des Chips benötigte Energie erhält dieser berührungslos vom Lesegerät. Sowohl die Datenübertragung als auch die Energieübertragung erfolgt durch ein elektromagnetisches Feld.

Detektierplättchen zur Identifizierung von Personen haben vorzugsweise die Größe einer Checkkarte. Bei Detektierplättchen mit einer Betriebsfrequenz im UHF-Bereich (865 - 868 MHz) und SHF-Bereich (2446 - 2454 MHz) sind dabei Dipolantennen der Abmessungen Lambda Halbe oder wenigstens mechanisch verkürzte, aber elektrisch verlängerte Dipolantennen realisierbar. In dieser Bauform kann eine Reichweite von mehreren Metern erzielt werden. Diese Reichweite ermöglicht auch eine Identifizierung von Personen in einem Kraftfahrzeug und dadurch indirekt auch die Zugangskontrolle des von der identifizierten Person benutzten Kraftfahrzeugs.

Es hat sich gezeigt, dass die Reichweite zwischen ein und demselben Detektierplättchen und einem Lesegerät abhängig vom Typ des Kraftfahrzeugs sein kann. Dazu wurde herausgefunden, dass diese Erscheinung unter anderem auf einer Dämmungsschicht gegen Wärme und Licht in der Windschutzscheibe beruht, die gleichzeitig eine Dämpfung elektromagnetischer Wellen bewirkt. Zwar befindet sich in jeder mit einer Dämmungsschicht versehenen Windschutzscheibe ein für elektromagnetische Wellen durch lässiges Fenster, dennoch besteht die genannte Abhängigkeit der Lesereichweite vom Typ des Kraftfahrzeugs fort.

Erwünscht wäre statt dessen eine einheitliche Lesereichweite bei unterschiedlichen Fahrzeugen. Um bei Fahrzeugen mit starker Dämpfung noch ein sicheres Lesen eines im Inneren eines Kraftfahrzeugs befindlichen Detektierplättchens zu ermöglichen, müsste die Empfangsempfindlichkeit des Lesegerätes auf eine starke Dämpfung bemessen und eingestellt werden. Bei Fahrzeugen mit einer sehr geringen Dämpfung würde dann aber eine sehr große Reichweite auftreten, was zu Störungen führen kann. Zum Beispiel könnte bei mehreren mit Zufahrtskontrollen ausgestatteten Fahrspuren nicht nur das der gewählten Fahrspur zugeordnete Lesegerät, sondern auch weitere parallel stehende Lesegeräte aktiviert werden, was aber unerwünscht wäre. Bei Fahrzeugen mit einer sehr geringen Dämpfung müsste dementsprechend die Lesereichweite durch geeignete Maßnahmen verringert werden.

Aus der EP 2 009 583 A2 ist ein Kartendatenträger mit einem Detektierplättchen bekannt, das ein Chipmodul und ein Antennenmodul umfasst. Das Chipmodul besteht aus einem Chip und einem mit dem Chip verbundenen Koppelelement. Das Antennenmodul umfasst einen Antennenleiter und das Koppelelement ist mit dem Antennenleiter berührungslos gekoppelt.

Ferner ist aus der US 2010/0194542 A1 ein Detektierplättchen, insbesondere zur Gebührenerfassung, bekannt, das sich an der Windschutzscheibe eines Kraftfahrzeugs befindet. Dieses Detektierplättchen, das eine Antenne umfasst, soll mittels einer Vorrichtung in einen betriebsfähigen Zustand und einen betriebsunfähigen Zustand geschaltet werden können. Als Vorrichtung dient ein Metallelement, das zur Einstellung des betriebsunfähigen Zustands auf die Antenne gesetzt und zur Einstellung des betriebsfähigen Zustands von der Antenne entfernt wird.

Der Erfindung liegt die Aufgabe zugrunde, ein Detektierplättchen zu schaffen, dessen Lesereichweite unter Berücksichtigung der Dämpfung im Inneren eines Fahrzeugs auf eine einheitliche Reichweite eingestellt werden kann.

Diese Aufgabe wird bei einem Detektierplättchen nach dem Oberbegriff des Anspruchs 1 durch die Merkmale dieses Anspruchs gelöst.

Weiterbildungen und vorteilhafte Ausgestaltungen ergeben sich aus den Unteransprüchen.

Der Realisierung der Erfindung liegen folgende Überlegungen zu Grunde. Eine Steuerung der Empfangsempfindlichkeit des Lesegerätes in Abhängigkeit von Kraftfahrzeugtypen würde eine eindeutige Erkennung des Kraftfahrzeugtyps voraussetzen. Dies wäre in der Praxis jedoch mit einem sehr hohen Aufwand verbunden. Eine Fertigung von Detektierplättchen mit unterschiedlicher Reichweite würde den Herstellungsaufwand vergrößern und damit das Detektierplättchen verteuern. Außerdem müsste bei einem Wechsel des Kraftfahrzeugs das Detektierplättchen der zu identifizierenden Person eventuell durch ein anderes mit anderer Reichweite ersetzt werden. Am günstigsten wäre es daher, bei einheitlichen, baugleichen Detektierplättchen deren Reichweite durch einfache zusätzliche Maßnahmen verändern zu können.

Bei der Erfindung wird davon ausgegangen, dass alle Detektierplättchen einheitlich aufgebaut und durch optimale Anpassung zwischen einem Chip, einem Koppelelement und einem Antennenleiter für eine maximale Reichweite ausgelegt sind. Gleichzeitig ist die Empfangsempfindlichkeit des Lesegerätes so eingestellt, dass die zur zuverlässigen Identifizierung einer Person erforderliche Reichweite auch dann noch erzielt wird, wenn das Detektierplättchen im Kraftfahrzeug eines Typs mitgeführt wird, dass unter getesteten marktüblichen Kraftfahrzeugen die höchste Dämpfung elektromagnetischer Wellen bewirkt. Damit bei Kraftfahrzeugen mit geringerem Dämpfungsmaß die Reichweite nicht unerwünscht ansteigt, wird das Detektierplättchen künstlich gedämpft und so die Reichweite wieder auf das gewünschte Maß verringert. Zur Dämpfung dient ein Dämpfungselement, das mechanisch in die Nähe eines Koppelelements zwischen dem Chip und dem Antennenleiter gebracht wird. Die Kopplung erfolgt berührungslos über ein Koppelfeld. In dieses Koppelfeld ragt das Dämpfungselement hinein und dämpft ausschließlich das Koppelfeld. Hingegen wird das elektromagnetische Feld des Antennenleiters nicht gedämpft. Dabei kann durch einen unterschiedlichen Abstand oder eine unterschiedliche Abdeckung ein unterschiedliches Dämpfungsmaß erzielt werden.

Das Koppelelement, der Antennenleiter und das Dämpfungselement sind einheitlich plan ausgerichtet. Eine reproduzierbare Einstellung der Dämpfung in Abhängigkeit eines bestimmten Abstandes zwischen Dämpfungselement und Koppelelement bzw. Antennenleiter oder in Abhängigkeit einer bestimmten Abdeckung des Koppelelements bzw. Antennenleiters durch das Dämpfungselement ist so gewährleistet.

Durch eine Verschiebung des Dämpfungselements in derselben Dimension, in der auch das Koppelelement und der Antennenleiter ausgeprägt sind, wird eine feinfühlige und lineare Veränderung der Dämpfung in Abhängigkeit der Verschiebung des Dämpfungselements erzielt.

Das die berührungslose Kopplung herstellende Koppelfeld ist ein magnetisches, induktiv erzeugtes, oder elektrisches, kapazitiv erzeugtes, oder elektromagnetisches Koppelfeld.

Das Dämpfungselement kann auf der Trägerebene gelagert sein.

Dadurch wird zwangsläufig eine mechanische Kopplung zwischen dem Dämpfungselement und dem auf der Trägerebene befindlichen Koppelelement und Antennenleiter bewirkt. Die Einstellung des Dämpfungsmaßes und die Handhabung des Detektierplättchens werden so erleichtert.

Das Dämpfungselement kann auf einem Trägerhalter gelagert sein.

Zunächst ist die Verwendung eines Trägerhalters in einem Kraftfahrzeug zweckmäßig, da auf diese Weise die richtige Positionierung des Detektierplättchens in Bezug auf ein für elektromagnetische Wellen durchlässiges Fenster in der Windschutzscheibe gewährleistet ist. Die Anordnung des Dämpfungselements auf dem Trägerhalter bewirkt, dass bei Einschieben des auf der Trägerebene angeordneten Detektierplättchens automatisch eine voreingestellte Dämpfung wirksam wird, ohne dass an dem Detektierplättchen selbst oder an dessen Trägerebene irgendwelche mechanische Veränderungen vorgenommen werden müssen.

Das Dämpfungselement kann auf einer Zusatzkarte angeordnet sein, die in den Trägerhalter einschiebbar ist.

Dies ermöglicht durch Wahl unterschiedlicher Zusatzkarten eine andere Art der Einstellung der Dämpfung mittels des Trägeralters.

Auf der Trägerebene und/oder dem Trägerhalter und/oder der Zusatzkarte können Positionsmarken angeordnet sein, die unterschiedlichen Dämpfungsmaßen entsprechen.

Diese aufgrund von Vorversuchen ermittelten Positionsmarken ermöglichen eine gezielte Einstellung des erforderlichen Dämpfungsmaßes für die gewünschte Lesereichweite des Detektierplättchens durch den Benutzer.

Das Dämpfungselement und/oder der Trägerhalter können wenigstens eine federbelastete Rastnase aufweisen, die in Dämpfungspositionen in eine der Rastnuten der Trägerebene und/oder der Zusatzkarte einrastet.

Durch die Rastnase und Rastnuten ist gewährleistet, dass die Position des Dämpfungselements gegenüber der Trägerebene nach einer manuellen Einstellung eingehalten wird nicht durch Lageveränderungen oder Erschütterungen verändert wird.

Das Detektierplättchen kann als Aufkleber ausgeführt sein, der seine Resonanzfrequenz erst erreicht, wenn er auf die Windschutzscheibe aufgeklebt wird. Im Unterschied zu den zuvor beschriebenen Varianten verbleibt das Detektierplättchen nach der Montage im Kraftfahrzeug. Auf der Rückseite des Detektierplättchens zur Fahrzeuginnenseite hin wird dann an einer Markierung das Dämpfungselement ebenfalls durch Aufkleben angebracht. Mithilfe des aufgeklebten Dämpfungselements können wie zuvor beschrieben verschiedene Dämpfungsstufen durch die Position des aufgeklebten Dämpfungselements an den Markierungslinien eingestellt werden.

Nachfolgend wird die Erfindung anhand von Ausführungsbeispielen erläutert, die in der Zeichnung dargestellt sind.

In der Zeichnung zeigen:
- Fig. 1 - 4: Detektierplättchen mit unterschiedlichen Antennen- und Koppelvarianten,
- Fig. 5a - c: ein Detektierplättchen mit einem Dämpfungselement in unterschiedlichen Positionen,
- Fig. 6: eine Trägerebene eines Detektierplättchens mit unterschiedlichen Positionsmarken,
- Fig. 7: einen Trägerhalter mit einem Dämpfungselement und
- Fig. 8: eine Zusatzkarte mit einem Dämpfungselement.

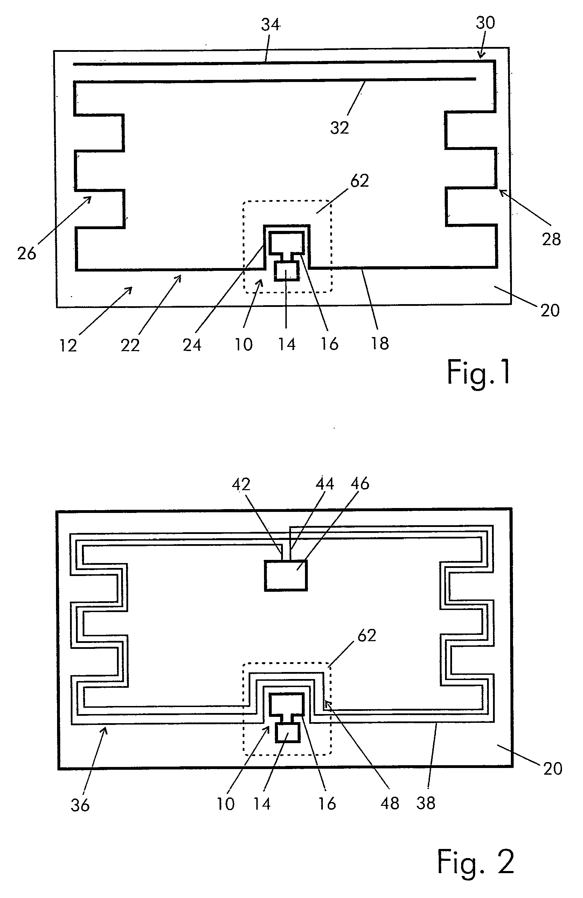

Die in den Figuren 1 - 4 dargestellten Detektierplättchen umfassen unterschiedliche Antennen- und Koppelvarianten. Das Detektierplättchen nach Fig. 1 zeigt ein Chipmodul 10 und ein Antennenmodul 12. Das Chipmodul 10 besteht aus einem Chip 14 und einer mit dem Chip 14 verbundenen Koppelschleife 16. Das Antennenmodul 12 besteht aus einem mit der Koppelschleife 16 induktiv gekoppelten Antennenleiter 18. Das Chipmodul 10 aus dem Chip 14 und der Koppelschleife 16 sowie das Antennenmodul 12 mit dem Antennenleiter 18 befindet sich auf einer Trägerebene 20, die hier eine Kunststofffolie ist. Der Antennenleiter 18 ist ein isolierter Draht, der durch Verlegetechnik mittels Druck und Wärme auf der Trägerebene 20 mechanisch befestigt ist.

Der Antennenleiter 18 ist nach Art einer Schleife in der Form eines Rechteckes strukturiert. An einem dem Chipmodul 10 benachbarten Schenkel 22 des Antennenleiters 18 ist eine Schlaufe 24 ausgebildet, die für eine enge Kopplung der Antennenschleife mit der Koppelschleife 16 des Chipmoduls 10 sorgt. Zwei sich gegenüberliegende, dem Schenkel 22 rechtwinklig anschließende Schenkeln 26, 28 des Antennenleiters 18 sind mäanderförmig gestaltet. Die Mäanderform sorgt für eine elektrische Verlängerung einer mechanisch verkürzten Antenne. An einem dem Schenkel 22 und dem Chipmodul 10 gegenüberliegenden Schenkel 30 der Antennenschleife sind Endbereiche 32, 34 des Antennenleiters 18 überlappend parallel mit geringem Abstand zueinander positioniert, aber nicht elektrisch verbunden sind.

Das in Fig. 2 dargestellte Detektierplättchen unterscheidet sich von dem in Fig. 1 gezeigten durch die Ausgestaltung des Antennenmoduls 36. Das Antennenmodul 36 besteht aus einem Antennenleiter 38, der durch Verlegetechnik auf einer aus einer Kunststofffolie bestehenden Trägerebene 20 angeordnet und befestigt ist. Der Antennenleiter 38 umfasst mehrere Windungen, deren Enden 42, 44 zu einem Chip 46 für den HF-Bereich geführt und mit Anschlüssen des Chips 46 verschweißt sind.

Die Windungen der durch den Antennenleiter 38 gebildeten Schleife haben ebenfalls eine Rechteckstruktur. An der dem Chip 46 gegenüberliegenden Seite verlaufen Windungsbereiche als Schlaufe 48. Analog zu Fig. 1 ist das Chipmodul 10 so auf der Trägerebene 20 positioniert und befestigt, dass die Koppelschleife 16 durch die Schlaufe 48 umschlossen wird. Die mehreren Windungen des Antennenleiters 38 verhalten sich durch kapazitiven Schluss für das Chipmodul 10 im UHF-Bereich wie eine Einwindungsantenne analog zu der Darstellung nach Fig. 1.

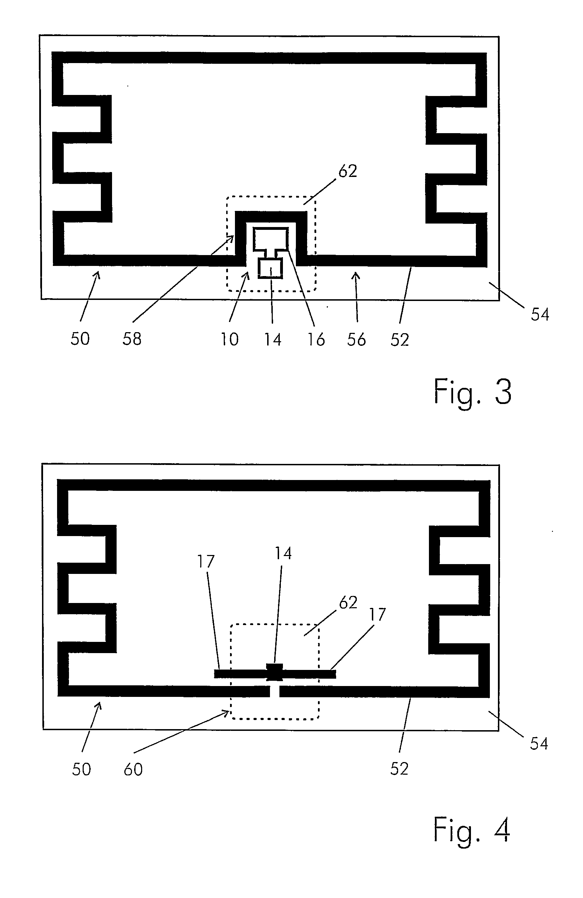

Bei der Darstellung nach Fig. 3 besteht ein Antennenmodul 50 aus einer in Ätztechnik hergestellten Leiterbahn als Antennenleiter 52 auf einer aus einer Leiterplatine bestehenden Trägerebene 54. Der Antennenleiter 52 bildet eine geschlossene Antennenschleife. An einem dem Chipmodul 10 benachbarten Schenkel 56 des Antennenleiters 52 ist eine Schlaufe 58 ausgebildet, die für eine enge Kopplung der Antennenschleife mit der Koppelschleife 16 des Chipmoduls 10 sorgt. Die Kopplung erfolgt induktiv über ein magnetisches Koppelfeld.

Die Darstellung nach Fig. 4 unterscheidet sich von Fig. 3 in der Art der Kopplung. Der Antennenleiter 54 bildet eine offene Antennenschleife. Statt einer induktiven Kopplung, wie bei den Figuren 1 bis 3, ist jedoch eine kapazitive Kopplung über ein elektrisches Koppelfeld vorhanden. Ein Koppelelement 60 besteht aus zwei mit dem Chip 14 verbundenen Fähnchen 17, die unterbrochenen Abschnitten eines Antennenleiter 52 eines Antennenmoduls 50 gegenüberstehen und parallel zu diesen verlaufen.

Allen Darstellungen nach den Figuren 1 bis 4 gemeinsam ist ein gestrichelt gezeichnetes Feld 62, das das Koppelelement 60 umgrenzt und einen Bereich darstellt, in dem durch Einführen eines Dämpfungselements eine Dämpfung der Koppelschleife 16 bzw. des Koppelelements 60 eintritt.

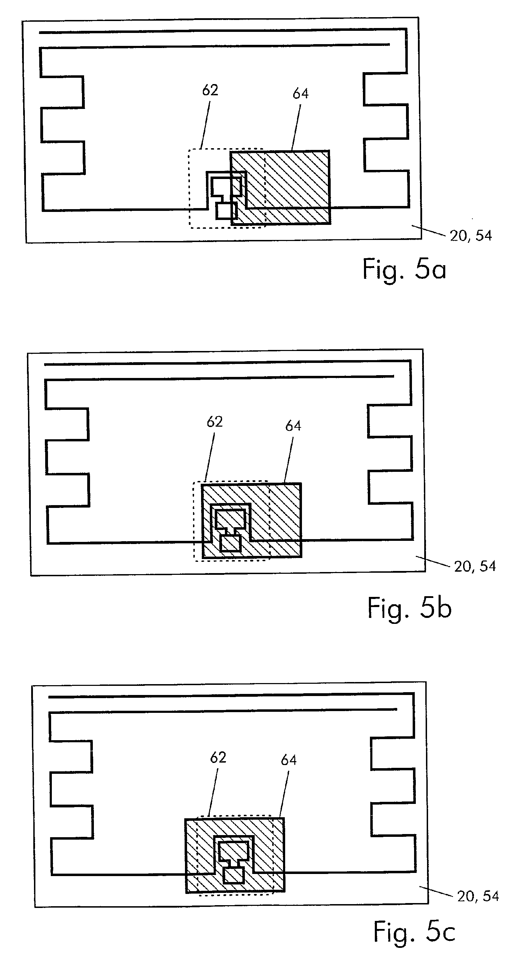

Die Figuren 5a bis 5c zeigen ein Detektierplättchen gemäß Fig. 1 mit einem Dämpfungselement 64 in unterschiedlichen Positionen über einem Feld 62. Das Dämpfungselement 64 besteht aus einer elektrisch leitfähigen Fläche, die parallel zur Trägerebene 20, 54 ausgerichtet ist. Das Dämpfungselement 64 ist relativ zum Feld 62 und parallel zur Trägerebene 20, 54 verschiebbar. Durch eine unterschiedlich breite Abdeckung des Feldes 62 mit der darin befindlichen Koppelschleife 16 bzw. dem darin befindlichen Koppelelement 60 wird die Anpassung zwischen dem Chip 14 und dem Antennenleiter 18, 38, 52 verändert. Diese Anpassung verschlechtert sich mit zunehmender Abdeckung des Feldes 62, wodurch das Detektierplättchen gedämpft wird und die Leserreichweite vermindert wird.

In den Figuren 5a bis 5c sind drei verschiedene Dämpfungspositionen dargestellt. Fig. 5a zeigt eine geringe Abdeckung und damit eine geringe Dämpfung, Fig. 5b zeigt eine mittlere Abdeckung und damit eine mittlere Dämpfung und Fig. 5c zeigt eine starke Abdeckung und damit eine starke Dämpfung. Ohne Dämpfungselement 64 besteht keine Dämpfung. Das Dämpfungselement 64 kann dabei ein Aufkleber sein, der an der jeweils markierten Stelle aufgeklebt werden kann. Dies trifft sowohl für aus einer Führung oder einem Trägerhalter entfernbare Detektierplättchen zu, wie auch mit einer Windschutzscheibe fest verbundenen Detektierplättchen in Form eines Aufklebers.

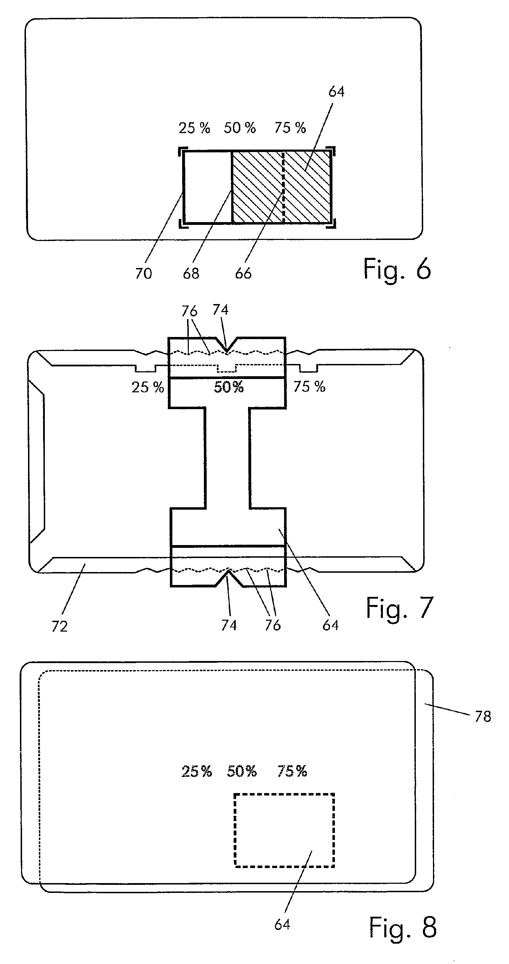

Fig. 6 zeigt eine Trägerebene einer der vorangehenden Ausführungen eines Detektierplättchens mit unterschiedlichen Positionsmarken 66, 68, 70. An den Positionsmarken 66, 68, 70 befinden sich Zahlenangaben, die das Maß der Verringerung der maximalen Lesereichweite bei entsprechender Stellung des Dämpfungselements 64 angeben. In der Praxis werden die Positionsmarken dadurch festgelegt, dass Reichweitenmessungen in den Abstufungen der Markierungen vorgenommen werden und die Stellungen des Dämpfungselements ermittelt werden.

Fig. 7 zeigt einen Trägerhalter 72 für eine Trägerebene 20, 54 mit einem Detektierplättchen, wie er zweckmäßig in einem Kraftfahrzeug eingesetzt wird. Auf dem Trägerhalter 72 befindet sich ein verschiebbares Dämpfungselement 64. An dem Dämpfungselement 64 ist eine Rastnase 74 angeordnet, die je nach Position relativ zum Trägerhalter 72 in eine der Rastnuten 76 im Trägerhalter 72 ein rasten kann. Bei Einführen einer Trägerebene 20, 54 mit einem Detektierplättchen in einen Trägerhalter 72 wird die Koppelschleife 16 bzw. das Koppelelement 60 dann automatisch im erforderlichen Maße abgedeckt und damit die gewünschte Dämpfung erzielt. Außerhalb des Trägerhalters 72 hat das Detektierplättchen die volle Reichweite.

Fig. 8 zeigt eine Zusatzkarte 78 mit einem Dämpfungselement 64. Diese Zusatzkarte 78 wird zusammen mit einer Trägerebene 20, 54 mit einem Detektierplättchen in einen Trägerhalter 72 eingeführt. Dabei wird dann ebenfalls ein Bereich der Kopfschleife 16 bzw. des Koppelelements 60 abgedeckt und die gewünschte Dämpfung erzielt. Es sind drei Zusatzkarten 78 verfügbar, bei der das Dämpfungselement 64 jeweils an unterschiedlichen Positionen angeordnet ist. Entsprechende Zahlenangaben zeigen das Maß der Reichweitenverminderung bei einer vorgegebenen Position des Dämpfungselements 64 an.

## Patentansprüche

1. Detektierplättchen, umfassend ein Chipmodul (10) aus einem Chip (14) und einem mit dem Chip (14) verbundenen Koppelelement (16, 60) und umfassend ein Antennenmodul (12, 36, 50) aus einem Antennenleiter (18, 38, 52), wobei das Koppelelement (16, 60) und der Antennenleiter (18, 38, 52) berührungslos gekoppelt und auf einer Trägerebene (20, 54) angeordnet sind und umfassend ein verstellbares Dämpfungselement (64), welches als elektrisch leitfähige Fläche parallel zur Trägerebene (20, 54) ausgerichtet ist und das Koppelelement (16, 60) in Dämpfungspositionen teilweise abdeckt und somit das die berührungslose Kopplung herstellende Koppelfeld (62) dämpft, **dadurch gekennzeichnet, dass** das Dämpfungselement (64) parallel zur Trägerebene (20, 54) in derselben Dimension, in der auch das Koppelelement (16, 60) und der Antennenleiter (18, 38, 52) angeordnet sind, verschiebbar ist, und durch eine Verschiebung des Dämpfungselements (64) eine kontrollierte und mehrstufige Veränderung der Dämpfung möglich ist.

2. Detektierplättchen nach Anspruch 1, **dadurch gekennzeichnet, dass** das die berührungslose Kopplung herstellende Koppelfeld (62) ein magnetisches, induktiv erzeugtes, oder elektrisches, kapazitiv erzeugtes, oder elektromagnetisches Koppelfeld (62) ist.

3. Detektierplättchen nach Anspruch 1 oder 2, **dadurch gekennzeichnet, dass** das Dämpfungselement (64) auf der Trägerebene (20, 54) gelagert ist.

4. Detektierplättchen nach Anspruch 1 oder 2, **dadurch gekennzeichnet, dass** das Dämpfungselement (64) auf einem Trägerhalter (72) gelagert ist.

5. Detektierplättchen nach Anspruch 1 oder 2, **dadurch gekennzeichnet, dass** das Dämpfungselement (64) auf einer Zusatzkarte (78) angeordnet ist, die in einen Trägerhalter (72) einschiebbar ist.

6. Detektierplättchen nach einem der Ansprüche 3 bis 5, **dadurch gekennzeichnet, dass** auf der Trägerebene (20, 54) und/oder dem Trägerhalter (72) und/oder der Zusatzkarte (78) Positionsmarken (66, 68, 70) angeordnet sind, die unterschiedlichen Dämpfungsmaßen entsprechen.

7. Detektierplättchen nach Anspruch 6, **dadurch gekennzeichnet, dass** das Dämpfungselement (64) an einer der Positionsmarken (66, 68, 70) angeklebt ist.

8. Detektierplättchen nach einem der Ansprüche 3 bis 6, **dadurch gekennzeichnet, dass** das Dämpfungselement (64) und/oder der Trägerhalter (72) und/oder die Zusatzkarte (78) wenigstens eine federbelastete Rastnase (74) aufweisen, die in Dämpfungspositionen in eine der Rastnuten (76) der Trägerebene (20, 54) einrastet.

9. Detektierplättchen nach einem der Ansprüche 1 bis 8, **dadurch gekennzeichnet, dass** das Detektierplättchen fest mit einer Windschutzscheibe verbunden oder in einem Trägerhalter (72) angeordnet ist.

## Claims

1. A detector plate, comprising a chip module (10) made up of a chip (14) and a coupling element (16, 60) connected to the chip (14), and comprising an antenna module (12, 36, 50) made up of an antenna conductor (18, 38, 52), wherein the coupling element (16, 60) and the antenna conductor (18, 38, 52) are contactlessly coupled and are arranged on a carrier plane (20, 54) and comprising an adjustable damping element (64), which is oriented as an electrically conductive surface parallel to the carrier plane (20, 54) and which partially covers the coupling element (16, 60) in damping positions and thus dampens the coupling field (62) which establishes the contactless coupling, **characterised in that** the damping element (64) can be displaced parallel to the carrier plane (20, 54) in the same dimension in which the coupling element (16, 60) and the antenna conductor (18, 38, 52) are also disposed, and a controlled and multi-step alteration of the damping is possible through a displacement of the damping element (64).

2. The detector plate according to Claim 1, **characterised in that** the coupling field (62) which establishes the contactless coupling is a magnetic, inductively generated, or electrical, capacitively generated, or electromagnetic coupling field (62).

3. The detector plate according to Claim 1 or 2, **characterised in that** the damping element (64) is borne on the carrier plane (20, 54).

4. The detector plate according to Claim 1 or 2, **characterised in that** the damping element (64) is borne on a carrier holder (72).

5. The detector plate according to Claim 1 or 2, **characterised in that** the damping element (64) is disposed on an additional card (78), which can be inserted into a carrier holder (72).

6. The detector plate according to one of Claims 3 to 5, **characterised in that** position marks (66, 68, 70) corresponding to various damping levels are disposed on the carrier plane (20, 54) and/or the carrier holder (72) and/or the additional card (78).

7. The detector plate according to Claim 6, **characterised in that** the damping element (64) is glued onto one of the position marks (66, 68, 70).

8. The detector plate according to one of Claims 3 to 6, **characterised in that** the damping element (64) and/or the carrier holder (72) and/or the additional card (78) has/have at least one spring-loaded catch lug (74) which, in damping positions, catches in one of the catching grooves (76) of the carrier plane (20, 54).

9. The detector plate according to one of Claims 1 to 8, **characterised in that** the detector plate is firmly connected to a windscreen or disposed in a carrier holder (72).

## Revendications

1. Plaquette de détection comportant un module de puce (10) constitué par une puce (14) et un élément de couplage (16, 60) relié à la puce (14), la plaquette de détection comportant également un module d'antenne (12, 36, 50) constitué par un conducteur d'antenne (18, 38, 52), l'élément de couplage (16, 60) et le conducteur d'antenne (18, 38, 52) étant couplés sans contact et disposés sur un plan de support (20, 54), ainsi qu'un élément d'atténuation (64) réglable orienté, comme surface électriquement conductrice, parallèlement au plan de support (20, 54), élément d'atténuation, qui recouvre partiellement l'élément de couplage (16, 60) dans des positions d'atténuation et atténue, par conséquent, la matrice de commutation établissant le couplage sans contact, **caractérisé en ce que** l'élément d'atténuation (64) est déplaçable parallèlement au plan de support (20, 54) dans la même dimension, dans laquelle sont également disposés l'élément de couplage (16, 60) et le conducteur d'antenne (18, 38, 52) et **en ce qu'**une modification de l'atténuation contrôlée et par paliers est possible par un déplacement de l'élément d'atténuation (64).

2. Plaquette de détection suivant la revendication 1, **caractérisée en ce que** la matrice de commutation (62) établissant le couplage sans contact est une matrice de commutation (62) magnétique, produite par induction, ou électrique, produite capacitivement, ou électromagnétique (62).

3. Plaquette de détection suivant la revendication 1 ou 2, **caractérisée en ce que** l'élément d'atténuation (64) est monté sur le plan de support (20, 54).

4. Plaquette de détection suivant la revendication 1 ou 2, **caractérisée en ce que** l'élément d'atténuation (64) est monté sur un dispositif porteur (72).

5. Plaquette de détection suivant la revendication 1 ou 2, **caractérisée en ce que** l'élément d'atténuation (64) est disposé sur une carte supplémentaire (78) qui peut être insérée dans un dispositif porteur (72).

6. Plaquette de détection suivant une des revendications 3 à 5, **caractérisée en ce que** des marques de position (66, 68, 70) correspondant à différents indices d'atténuation sont disposées sur le plan de support (20, 54) et/ou sur le dispositif porteur (72) et/ou sur la carte supplémentaire (78).

7. Plaquette de détection suivant la revendication 6, **caractérisée en ce que** l'élément d'atténuation (64) est collé sur une des marques de position (66, 68, 70).

8. Plaquette de détection suivant une des revendications 3 à 6, **caractérisée en ce que** l'élément d'atténuation (64) et/ou le dispositif porteur (72) et/ou la carte supplémentaire (78) présentent au moins un ergot d'arrêt sollicité par ressort (74), qui s'enclenche, dans des positions d'atténuation, dans une des rainures d'arrêt (76) du plan de support (20, 54).

9. Plaquette de détection suivant une des revendications 1 à 8, **caractérisée en ce que** la plaquette de détection est reliée de manière fixe à un pare-brise ou disposée dans un dispositif porteur (72).
